# EUROPÄISCHE PATENTSCHRIFT

(11) **EP 3 833 881 B1**
(45) Veröffentlichungstag und Bekanntmachung des Hinweises auf die Patenterteilung: **02.10.2024**
(21) Anmeldenummer: 19752158.6
(22) Anmeldetag: 05.08.2019
(51) Int. Cl.: F16C 13/00

(54) **MELKKARUSSELL MIT EINEM TRAGWAGEN**
MILKING CAROUSEL HAVING A SUPPORTING CARRIAGE
CARROUSEL DE TRAITE COMPRENANT UN CHARIOT PORTEUR

(30) Priorität: 10.08.2018 DE 202018104606 U
(43) Veröffentlichungstag der Anmeldung: 16.06.2021
(73) Patentinhaber: GEA Farm Technologies GmbH, 59199 Bönen (DE)
(72) Erfinder: NAHUES, Michael, 48231 Warendorf (DE); HENSEL, Derk, 06917 Jessen (DE); SAERBECK, Peter, 58313 Herdecke (DE)
(74) Vertreter: Neumann, Ditmar
(86) Internationale Anmeldenummer: PCT/EP2019/071005
(87) Internationale Veröffentlichungsnummer: WO 2020/030581

(56) Entgegenhaltungen:
- US-A1- 2017 030 406
- N/A: "AutoRotor Magnum 90", 1 August 2011 (2011-08-01), B?nen, pages 1 - 12, XP055441633, Retrieved from the Internet <URL:https://www.gea.com/it/binaries/DairyFarming_AR_Magnum_90_Brosch?re_DE_0315_tcm39-22252.pdf> [retrieved on 20180117]

## Beschreibung

Der Gegenstand der Erfindung bezieht sich auf ein Melkkarussell umfassend eine um eine Drehachse verdrehbare Plattform mit einer Mehrzahl von Melkplätzen sowie auf einen Tragwagen und auf einem Segment.

Melkkarussells zum Melken von Tieren, insbesondere von Kühen sind bekannt. Durch die Druckschrift DE 26 50 741 A1 ist bspw. ein Melkkarussell bekannt, welches eine um eine vertikal verlaufende Drehachse verdrehbare Plattform mit einer Mehrzahl von Melkplätzen umfasst. Die im Wesentlichen ringförmig ausgebildete Plattform weist an ihrer Unterseite eine Vielzahl von Rollenpaaren auf, die auf einem Boden abrollen. Um eine Bewegung in radialer Richtung zu verhindern, ist auf der Unterseite der Plattform eine Führungsplatte vorgesehen, die in eine U-förmige Führungsschiene eingreift. Die Führungsschiene ist am Boden befestigt.

Durch die Druckschrift US 2017/0030406 A1 ist eine weitere Ausführungsform eines Melkkarussels bekannt. Bei dieser Ausführungsform sind die Rollen durch einen erste Ring und einen zweiten Ring miteinander verbunden, wobei der Abstand zwischen den Ringen so gewählt ist, dass die Rollen zwischen den beiden Ringen angeordnet sind.

Durch die Betriebsanleitung/Montageanleitung/Ersatzteilliste 7056-9000-056 01-16 "Melkkarussell AutoRotor PerFormer Fahrgestell und Gerüstaufbauten ohne Wartungsgrube (Non Subway)" der Firma GEA Farm Technologies GmbH ist ein Melkkarussell bekannt, welches eine um eine im Wesentlichen vertikal verlaufende Drehachse verdrehbare Plattform mit einer Mehrzahl von Melkplätzen bekannt Die Plattform weist an ihrer Unterseite eine auf einem gedachten Kreisring angeordnete Führungsbahn auf. Es ist eine auf einem Kreisumfang angeordnete stationäre Tragbahn vorgesehen. Die Tragbahn und die Führungsbahn sind konzentrisch zueinander und übereinander angeordnet. Zwischen der Führungsbahn und der Tragbahn ist ein Tragwagen mit Rollen vorgesehen. Der Tragwagen ist durch eine Mehrzahl von Gliedern, die gelenkig miteinander verbunden sind, gebildet. Der Tragwagen ist endlos. Ein solches Melkkarussel ist durch das Prospekt "AutoRotor Magnum 90 Die neue Dimension" der der GEA Farm Technologies GmbH bekannt.

Zur Montage des Melkkarussells, dessen Durchmesser abhängig von einer Anzahl von Melkplätzen ist, wird zunächst ein Fundament bereitgestellt, auf dem Stützböcke angeordnet werden. Auf den Stützböcken und mit diesen verbunden wird die kreisförmige stationäre Tragbahn montiert. Die Tragbahn besteht aus einer Vielzahl von kreisbogenförmigen Schienen, die miteinander zu einer kreisförmigen Bahn verbunden werden. Auf der Tragbahn werden die Glieder des Tragwagens angeordnet und gelenkig miteinander verbunden. In vorgegebenen Abständen wird ein Spannschloss eingebracht, so dass im fertig montierten Zustand des Tragwagens die Glieder vorzugsweise spielfrei nach Art einer Gliederkette miteinander verbunden sind. Auf den so bereitgestellten Tragwagen werden einzelne Teile der Führungsbahn fluchtend mit der Tragbahn positioniert und miteinander verbunden. Auf der so bereitgestellten Führungsbahn wird die Plattform angeordnet.

Hiervon ausgehend liegt der vorliegenden Erfindung die Zielsetzung zugrunde, den Aufbau des Melkkarussells zu verbessern und insbesondere den Montageaufwand zu verringern.

Diese Aufgabe wird erfindungsgemäß durch ein Melkkarussell mit den Merkmalen des Anspruchs 1 gelöst. Vorteilehafte Weiterbildungen und Ausgestaltungen des Melkkarussells sind Gegenstand der abhängigen Ansprüche. Die in den Ansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsformen der Erfindung aufgezeigt werden.

Das erfindungsgemäße Melkkarussell weist eine um eine Drehachse verdrehbare Plattform auf, die mit einer Mehrzahl von Melkplätzen ausgestattet ist. Es besteht die Möglichkeit, dass jeder Melkplatz mit einem automatischen Melksystem ausgestattet ist. Unterhalb der Plattform ist eine kreisförmige Führungsbahn vorgesehen. Des Weiteren ist eine stationär angeordnete Tragbahn vorgesehen, wobei zwischen der Führungsbahn und der Tragbahn ein Tragwagen mit Rollen angeordnet ist. Die Tragbahn und die Führungsbahn sind konzentrisch zu- und übereinander angeordnet. Der Mittelpunkt des gedachten Kreises der Tragbahn sowie der Mittelpunkt der Führungsbahn liegen auf der vertikal verlaufenden Drehachse der verdrehbaren Plattform. Der Tragwagen ist durch eine Mehrzahl kreisringförmiger Segmente gebildet.

Durch diese vorteilhafte Konstruktion des Tragwagens wird ein Tragwagen bereitgestellt, dessen Gestalt im Wesentlichen einem Kreisring entspricht, so dass der konstruktive Aufwand verringert und die Montageaufwendungen verkleinert werden können.

Im Gegensatz zu einem aus dem Stand der Technik bekannten Tragwagen, bei dem die Glieder einen geschlossenen Polygonzug bilden, verfügt das erfindungsgemäße Karussell über einen Tragwagen, der im Wesentlichen kreisringförmig ist. Hierdurch werden auch die Belastungen im Betrieb des Karussells, das heißt wenn die Plattform sich mit auf der Plattform befindendem Milchvieh verdreht wird, verringert.

Vorzugsweise sind die Segmente des Tragwagens starr miteinander verbunden. Zum Ausgleich möglicher Fertigungstoleranzen kann der Tragwagen wenigstens ein Zwischenglied aufweisen, welches zwischen zwei benachbarten Segmenten angeordnet ist, um so fertigungsbedingte Toleranzen zu kompensieren. Das Zwischenglied kann beispielsweise in Form eines Spannschlosses ausgebildet sein.

Die starre Verbindung der Segmente untereinander zu einem geschlossenen Tragwagen hat auch den Vorteil, dass das Verhalten des Tragwagens unabhängig von der Verdrehrichtung der Plattform ist. Mit anderen Worten, abhängig davon, ob auf den Tragwagen in Umfangsrichtung betrachtet eine Zugkraft oder eine Druckkraft wirkt, ist das Verhalten des Tragwagens gleich, was bei den bekannten Tragwagen nach dem Stand der Technik nicht zwingend der Fall ist, insbesondere wenn die gelenkigen Verbindungen der Segmente des Tragwagens einem Verschleiß unterliegen.

Die kreisringförmige Ausbildung der Segmente vereinfacht auch die Montage des Tragwagens, da es nunmehr nicht darauf ankommt, ob die Plattform im Uhrzeigersinn oder gegen den Uhrzeigersinn gedreht werden wird.

Obwohl eine starre Verbindung der Segmente untereinander zu einem geschlossenen Tragwagen die bevorzugte Ausgestaltung des Tragwagens ist, kann es vorteilhaft sein, wenn die Segmente gelenkig miteinander verbunden sind. Eine solche Ausgestaltung des Tragwagens ist insbesondere dann vom Vorteil, wenn ein bestehendes Melkkarussell mit einem Tragwagen, der durch eine Mehrzahl kreisringförmiger Segmente gebildet ist, nachträglich ausgestattet werden soll. Die gelenkige Verbindung der Segmente hat den Vorteil, dass Toleranzen der bereits vorhandenen Führungsbahn und der Tragbahn bei einem bereits bestehenden Melkkarussell ausgeglichen werden können.

Gemäß einer weiteren vorteilhaften Ausgestaltung des erfindungsgemäßen Melckarussells wir vorgeschlagen, dass jedes Segment wenigstens zwei beabstandet zueinander angeordnete Rollen aufweist. Hierdurch werden insbesondere die Handhabung der Segmente und die Montage der Segmente zu einem Tragwagen wesentlich vereinfacht. Des Weiteren wird die Anzahl der notwendigen Montageschritte zur Ausbildung des Tragwagens verringert.

Zur Verringerung der Belastungen der Rollen des Tragwagens wird vorgeschlagen, dass jede Rolle eine Achse aufweist, wobei eine gedachte Verlängerung der Achse die Drehachse der verdrehbaren Plattform unter einem Winkel von 90° schneidet. Hierdurch wird insbesondere der Verschleiß der Rollen verringert, da im Wesentlichen keine Tangentialkräfte auf die Rolle wirken.

Gemäß einer noch weiteren vorteilhaften Ausgestaltung des erfindungsgemäßen Melkkarussell wird vorgeschlagen, dass wenigstens eine Rolle wenigstens einen Kragen aufweist. Vorzugsweise ist der Kragen radial auswärts bezogen auf die Drehachse der Plattform angeordnet, so dass der Kragen entlang der Führungsbahn und/oder Tragbahn läuft.

Jedes Segment des Tragwagens des erfindungsgemäßen Melkkarussells weist in Umfangsrichtung des Segments betrachtet wenigstens zwei beabstandet zueinander ausgebildete Prüfabschnitte auf.

Es ist festgestellt worden, dass die bogenförmigen Elemente, die zu der Tragbahn bzw. der Führungsbahn miteinander verbunden werden, Fertigungstoleranzen aufweisen, die sich insbesondere bei der Montage stark bemerkbar machen. Dies ist insbesondere in dem Bereich der Verbindung zweier benachbarter Elemente einer Tragbahn bzw. einer Führungsbahn der Fall, so dass in diesem Bereich die Krümmung nicht den Vorgaben entspricht. Es besteht zwar die Möglichkeit, mittels entsprechender Messverfahren die Krümmung der Tragbahn bzw. Führungsbahn zu bestimmen, dies ist jedoch mit einem erheblichen zeitlichen und apparativen Aufwand verbunden. Dadurch, dass das Segment wenigstens zwei beabstandet zueinander ausgebildete Prüfabschnitte aufweist, wird eine Lehre bereitgestellt, mittels derer die Krümmung einzelner Elemente der Führungsbahn und/oder Tragbahn überprüft werden können. Des Weiteren kann auch die Krümmung der Tragbahn während der Montage der Elemente der Tragbahn sowie der Führungsbahn überprüft werden. So ist es vorteilhaft, wenn die Prüfabschnitte eine radiale Erstreckung aufweisen, die einer radialen Erstreckung der Tragbahn oder der Führungsbahn entspricht. Durch ein Auflegen und/oder Bewegen des Segments auf und/oder entlang eines Elements der Tragbahn oder der Führungsbahn kann die Masshaltigkeit der Tragbahn oder Führungsbahn überprüft werden. Üblicherweise sind die bogenförmigen Elemente der Tragbahn und der Führungsbahn aus doppel-T-förmigen Profilen gebogen, wobei auch die doppel-T-förmigen Profile in sich bereits auch Fertigungstoleranzen haben.

Bevorzugt ist auch eine Ausbildung, bei der die radialen Erstreckungen der Prüfabschnitte und der Tragbahn sowie der Führungsbahn gleich sind. Dies vereinfacht auch die Montage der Führungsbahn, nachdem die Tragbahn bereits montiert wurde und der Tragwagen vollständig auf der Tragbahn bereitgestellt wurde.

Nach einem weiteren erfinderischen Gedanken wird ein Tragwagen eines Melkkarussells mit den Merkmalen des Anspruchs 8 vorgeschlagen, wobei der Tragwagen Rollen aufweist, die zwischen einer Tragbahn und einer Führungsbahn des Melkkarussells anordenbar sind, wobei der Tragwagen durch eine Mehrzahl kreisförmiger Segmente gebildet ist.

Nach einem noch weiteren erfinderischen Gedanken wird ein Segment eines Tragwagens eines Melkkarussells mit den Merkmalen des Anspruchs 14 vorgeschlagen, wobei das Segment kreisförmig ausgebildet ist und wenigstens eine Rolle aufweist.

Die Erfindung sowie das technische Umfeld werden anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse lediglich schematisch sind. Es zeigen:
- Fig. 1:: schematisch und perspektivisch einen Ausschnitt eines Melkkarussells,
- Fig. 2:: schematisch ein kreisringförmiges Segment eines Tragwagens in einer Draufsicht ohne Rollen,
- Fig. 3:: das Segment mit Rollen, und
- Fig. 4:: schematisch und im Schnitt ein Teil eines Melkkarussells.

Obwohl vorstehend ein Melkkarussell zum Melken von Kühen beschrieben worden ist, kann das Melkkarussell auch zum Melken anderer milchgebender Tiere eingesetzt bzw. verwendet werden.

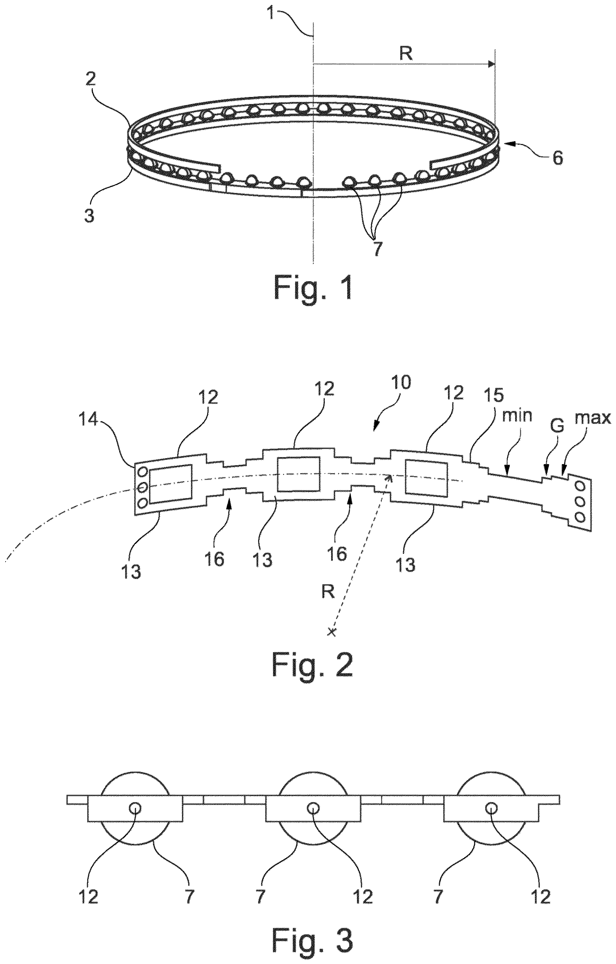

Ein Melkkarussell umfasst eine um eine Drehachse 1 verdrehbare Plattform mit einer Mehrzahl von Melkplätzen. Zur Verdeutlichung der Erfindung und zur Verbesserung der Übersichtlichkeit ist in der Fig. 1 die Darstellung einer verdrehbaren Plattform und der sich auf der Plattform befindenden Melkplätze verzichtet worden. Ein Melkkarussell mit einer Plattform ist durch US 6,990,923.

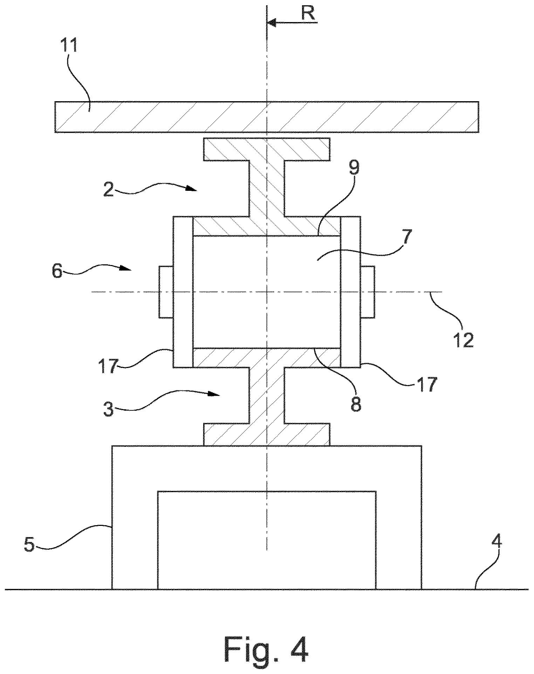

Mit der nicht dargestellten Plattform in Fig. 1 ist eine Führungsbahn 2 verbunden. Die Führungsbahn 2 bildet einen Kreisring, der durch eine Mehrzahl von bogenförmigen Teilen gebildet ist. Die Führungsbahn 2 kann im Querschnitt doppel-T-förmig ausgebildet sein, wie dies aus der Fig. 4 ersichtlich ist. Konzentrisch zu der Führungsbahn 2 und unterhalb der Führungsbahn 2 ist eine Tragbahn 3 vorgesehen. Auch die Tragbahn 3 ist vorzugsweise durch eine Mehrzahl von kreisbogenförmigen Segmenten zusammengesetzt. Die Tragbahn 3 kann durch ein doppel-T-förmiges Profil gebildet sein, wie dies aus der Fig. 4 ersichtlich ist. Sowohl die Tragbahn 3 als auch die Führungsbahn 2 haben im Wesentlichen den gleichen Radius R bezogen auf die Drehachse 1.

Die Tragbahn 3 ist stationär, das heißt unbeweglich angeordnet. Hierzu sind auf einem Fundament 4 Stützböcke 5 angeordnet. Die Stützböcke 5 sind vorzugsweise äquidistant zueinander auf einem gedachten Kreisumfang verteilt, so dass die Tragbahn 3 sicher und zuverlässig auf dem gewünschten Kreisumfang positioniert werden kann, wobei der Mittelpunkt des Kreisumfangs mit dem Mittelpunkt des Melkkarussells zusammenfällt.

Zwischen der Führungsbahn 2 und der Tragbahn 3 ist ein Tragwagen 6 angeordnet, der eine Mehrzahl von Rollen 7 aufweist. Die Rollen 7 stehen in Kontakt mit einer Lauffläche 8 der Tragbahn 3 und einer Lauffläche 9 der Führungsbahn 2. Der Tragwagen 6 ist endlos ausgebildet. Er umfasst eine Mehrzahl kreisringförmiger Segmente 10, die vorzugsweise starr miteinander verbunden sind. Beispielhaft ist in der Fig. 2 ein kreisringförmiges Segment 10 dargestellt. In der Fig. 2 ist ein Radius R der Segmente eingezeichnet. Derselbe Radius R ist auch in der Fig. 4 eingezeichnet. Er stellt den Abstand zwischen der Drehachse 1 der Plattform 11 und einer vertikalen Symmetrieebene der Tragbahn 3 und der Führungsbahn 2 dar.

Fig. 2 zeigt das Segment 10 ohne Rollen 7, wie dies in der Fig. 3 dargestellt ist. Eine jede Rolle 7 ist verdrehbar um eine Achse 12. Die Achsen 12 sind so ausgerichtet, dass eine gedachte Verlängerung der jeweiligen Achse 12 die Drehachse 1 unter einem im Wesentlichen rechten Winkel schneidet.

Das Segment 10, welches in der Fig. 2 sowie in der Fig. 3 beispielhaft dargestellt ist, weist drei Rahmen 13 auf, die zur Aufnahme der Rollen 7 geeignet und bestimmt sind. Die jeweiligen Endbereiche 14, 15 des Segments 10 weisen Verbindungsmittel auf, so dass benachbarte Segmente vorzugsweise starr miteinander verbindbar sind.

In Umfangsrichtung des Segments betrachtet sind in dem dargestellten Ausführungsbeispiel nach Fig. 2 und Fig. 3 drei beabstandet zueinander ausgebildete Prüfabschnitte 16 vorgesehen. Der Prüfabschnitt 16 ist in dem dargestellten Ausführungsbeispiel stufig ausgebildet. In Umfangsrichtung betrachtet ist ein Abschnitt G vorgesehen.

Die radiale Erstreckung des Abschnitts G entspricht vorzugsweise der Breite der Lauffläche der Tragbahn 3 und der Lauffläche 9 der Führungsbahn 2. Mit anderen Worten, die Lauffläche 8 der Tragbahn 3 und die Lauffläche 9 der Führungsbahn 2 sind deckungsgleich.

Mit "min" ist ein minimaler Prüfradius bezeichnet. Mit "max" ist ein maximaler Prüfradius bezeichnet.

Zur Ausbildung eines Melkkarussells wird ein Fundament 4 bereitgestellt. Auf dem Fundament 4 wird eine Vielzahl von Stützböcken 5 vorzugsweise äquidistant zueinander auf einem durch das Melkkarussell definierten Umfang verteilt und mit dem Fundament verbunden. Auf wenigstens zwei Stützböcken 5 wird ein bogenförmiges Element der Tragbahn 3 positioniert, wobei der Radius, der durch das Melkkarussell vorgegeben ist, von der Drehachse des Melkkarussells aus betrachtet eingehalten werden muss. Das Element der Tragbahn 3 wird so ausgerichtet, dass die Lauffläche 8 im Wesentlichen in einer horizontalen Ebene liegt.

Vor der Montage des Elements der Tragbahn 3 wird das Segment 10 ohne Rollen 7 auf die Lauffläche 8 gelegt und in Umfangsrichtung des Elements der Tragbahn 3 vorzugsweise verschoben, wobei der Abstand der Prüfabschnitte zueinander kleiner ist als die Länge des Elements der Tragbahn 3. Mittels der Prüfabschnitte 16 kann nun überprüft werden, ob das Element der Tragbahn 3 die vorgegebene Krümmung aufweist. Sind die Abschnitte G der Prüfabschnitte 16 mit der Lauffläche der Tragbahn 3 deckungsgleich, so weist das Element der Tragbahn 3 die vorgegebene Krümmung und Breite der Lauffläche auf. Wird bspw. festgestellt, dass die Lauffläche zumindest am äußeren oder am inneren Rand innerhalb des Abschnitts G des Prüfabschnitts 16 liegt, so kann die Aussage getroffen werden, dass das Element der Tragbahn 3 noch innerhalb einer Toleranz liegt. Ist dies nicht der Fall, so ist es notwendig, die Krümmung des Elements der Tragbahn 3 nachzuarbeiten. Durch Verschieben des Segments 10 auf dem Element der Tragbahn 3 kann eine Überprüfung der Fertigungstoleranzen des Elements der Tragbahn 3 an mehreren Stellen erfolgen.

Erfüllt das Element der Tragbahn 3 die Vorgaben, so kann das Element der Tragbahn 3 auf wenigstens zwei Stützböcken befestigt werden.

Die Überprüfung der weiteren Elemente der Tragbahn 3 wird entsprechend durchgeführt.

Benachbarte Elemente der Tragbahn 3 werden miteinander starr verbunden. Das Segment 10 kann auch zur Überprüfung der Krümmung im Verbindungsbereich zweier benachbarter Elemente der Tragbahn 3 verwendet werden.

Da die Krümmung bzw. der Radius, den die Führungsbahn 2 aufweist, identisch mit dem Radius R der Tragbahn 3 ist, können auch die einzelnen Elemente der Führungsbahn 2 mittels des Segments 10 des Tragwagens überprüft werden.

Aus der Fig. 4 sowie aus dem Gesamtzusammenhang ist dem Fachmann bekannt, dass vorzugsweise die Lauffläche 8 der Tragbahn 3 und die Lauffläche 9 der Führungsbahn 2 deckungsgleich sind. Ist die Tragbahn 3 vollständig zu einer ringförmigen Bahn aufgebaut, so kann ein Segment 10 mit Rollen 7 auf der Tragbahn 3 positioniert werden.

Auf dieses Segment 10 oder mehrere miteinander verbundene Segmente 10 wird ein erstes Element der Führungsbahn 2 positioniert. Hierbei liegt das Element der Führungsbahn 2 auf den Rollen 7 auf. Jede Rolle 7 kann vorzugsweise einen umlaufenden Kragen 17 aufweisen, so dass der Kragen 17 auch für die Montage der Führungsbahn 2 als eine radiale Begrenzung genutzt werden kann.

Zur Ausrichtung eines Elements der Führungsbahn 2 wird das Element mittels einer nicht dargestellten Klemmeinrichtung im Bereich der Abschnitte G der Prüfabschnitte 16 mit der Tragbahn 3, vorzugsweise benachbart zu einem Stützbock 5 und/oder mit dem Stützbock 5 geklemmt, so dass eine Ausrichtung des Elements einer Führungsbahn 2 an der Tragbahn 3 und zumindest einem Segment 10 erreicht wird.

Ist das erste Element der Führungsbahn 2 festgeklemmt und ausgerichtet, so kann ein weiteres Element der Führungsbahn 2 auf zumindest ein Segment 10 oder mehrere Segmente aufgelegt werden und zur Verbindung mit dem bereits festgelegten Element der Führungsbahn 2 ausgerichtet und mit diesem verbunden werden. Die weiteren Elemente der Führungsbahn 2 werden entsprechend gehandhabt, so dass nach Verbindung sämtlicher Elemente der Führungsbahn 2 eine kreisringförmige Führungsbahn 2 entsteht.

Hierdurch wird die Montage wesentlich vereinfacht und eine sehr genaue Ausrichtung sowohl der Führungsbahn 2 als auch der Tragbahn 3 zueinander als auch zum Drehmittelpunkt bzw. zur Drehachse des Melkkarussells erreicht. Auf die Führungsbahn 2 wird die Plattform 11 montiert.

Das Segment 10 ist vorzugsweise einstückig hergestellt. Insbesondere wird vorgeschlagen, dass das Segment 10 aus einem metallischen plattenförmigen Material, insbesondere durch Laserschneiden oder Stanzen, hergestellt wird. Der Rahmen 13 kann durch entsprechendes Umformen der Laschen ausgebildet sein. Durch ein solches Herstellungsverfahren wird eine relativ hohe Genauigkeit der Prüfabschnitte 16 erreicht, was auch zu einer erhöhten Montagegenauigkeit des Melkkarussells insgesamt führt. Durch eine sehr genaue Montage der Tragbahn 3 sowie der Führungsbahn 2 wird eine gleichmäßige Belastung der Rollen 7 erreicht, so dass die Gefahr eines übermäßigen Verschleißes einzelner Rollen vermieden werden kann. Durch die Montage wird idealerweise erreicht, dass der Radius R der Lauffläche 8 sowie der Lauffläche 9 über den gesamten Umfang bezogen auf die Drehachse der Plattform 11 identisch ist.

### Bezugszeichenliste

1 Drehachse
2 Führungsbahn
3 Tragbahn
4 Fundament
5 Stützbock
6 Tragwagen
7 Rolle
8 Lauffläche
9 Lauffläche
10Segment
11 Plattform
12 Achse
13 Rahmen
14 Endbereich
15 Endbereich
16 Prüfabschnitt
17 Kragen
G Abschnitt
min minimaler Prüfradius
max maximaler Prüfradius
R Radius

## Patentansprüche

1. Melkkarussell umfassend
eine um eine Drehachse (1) verdrehbare Plattform (11) mit einer Mehrzahl von Melkplätzen,
einer kreisförmigen stationären Tragbahn (3),
einer kreisförmigen mit der Plattform (11) verbundenen Führungsbahn (2), wobei die Tragbahn (3) und die Führungsbahn (2) konzentrisch zu- und übereinander angeordnet sind, und
einen Tragwagen (6) mit Rollen (7), die zwischen der Tragbahn (3) und der Führungsbahn (2) angeordnet sind,
**dadurch gekennzeichnet, dass**
der Tragwagen (6) durch eine Mehrzahl kreisringförmiger Segmente (10) gebildet ist, die zwischen der Tragbahn (3) und der Führungsbahn (2) angeordnet sind, wobei jedes Segment (10) in Umfangsrichtung des Segments (10) betrachtet wenigstens zwei beabstandet zueinander ausgebildete Prüfabschnitte (16) aufweist..

2. Melkkarussell nach Anspruch 1, wobei die Segmente (10) gelenkig miteinander verbunden sind.

3. Melkkarussell nach Anspruch 1 oder 2, wobei jedes Segment (10) wenigstens zwei beabstandet zueinander angeordnete Rollen (7) aufweist.

4. Melkkarussell nach Anspruch 3, wobei jede Rolle (7) eine Achse (12) aufweist, wobei eine gedachte Verlängerung der Achse (12) die Drehachse (1) schneidet.

5. Melkkarussell nach Anspruch 3 oder 4, wobei wenigstens eine Rolle (7) wenigstens einen Kragen (17) aufweist.

6. Melkkarussell nach wenigstens einem der Ansprüche 1 bis 5, wobei jeder Prüfabschnitt (16) eine radiale Erstreckung aufweist, die einer radiale Erstreckung der Tragbahn (3) oder der Führungsbahn (2) entspricht.

7. Melkkarussell nach wenigstens einem der Ansprüche 1 bis 5, wobei die radialen Erstreckungen der Prüfabschnitt (16) und der Tragbahn (3) sowie der Führungsbahn (2) gleich sind.

8. Tragwagen (6) eines Melkkarussells, das eine Tragbahn (3) und eine Führungsbahn (2) aufweist, wobei der Tragwagen (6) Rollen (7) aufweist, die dazu geeignet und bestimmt sind zwischen einer Tragbahn (3) und einer Führungsbahn (2) des Melkkarussells angeordnet zu werden, **dadurch gekennzeichnet, dass** der Tragwagen (6) durch eine Mehrzahl kreisringförmiger Segmente (10) gebildet ist, wobei jedes Segment (10) in Umfangsrichtung des Segments (10) betrachtet wenigstens zwei beabstandet zueinander ausgebildete Prüfabschnitte (16) aufweist..

9. Tragwagen (6) nach Anspruch 8, wobei jedes Segment (10) wenigstens zwei beabstandet zueinander angeordnete Rollen (7) aufweist.

10. Tragwagen (6) nach Anspruch 9, wobei jede Rolle (7) eine Achse (12) aufweist, wobei eine gedachte Verlängerung der Achse (12) eine Drehachse (1) des Melkkarussells schneidet.

11. Tragwagen (6) nach Anspruch 8 oder 9, wobei wenigstens eine Rolle (7) wenigstens einen Kragen (17) aufweist.

12. Tragwagen (6) nach wenigstens einem der Ansprüche 8 bis 11, wobei jeder Prüfabschnitt (16) eine radiale Erstreckung aufweist, die einer radiale Erstreckung der Tragbahn (3) oder der Führungsbahn (2) entspricht.

13. Tragwagen (6) nach wenigstens einem der Ansprüche 8 bis 12, wobei die radialen Erstreckungen der Prüfabschnitte (16) und der Tragbahn (3) sowie der Führungsbahn (2) gleich sind.

14. Segment (10) eines Tragwagens (6) eines Melkkarussells, das eine Tragbahn (3) und eine Führungsbahn (2) aufweist, **dadurch gekennzeichnet, dass** das Segment (10) kreisringförmig ausgebildet ist und wenigstens eine Rolle (7) aufweist, wobei dieses in Umfangsrichtung des Segments (10) betrachtet wenigstens zwei beabstandet zueinander ausgebildete Prüfabschnitte (16) aufweist, mittels derer die Krümmung einzelner Elemente der Führungsbahn und/oder Tragbahn überprüft werden können..

15. Segment (10) nach Anspruch 14, wobei dieses wenigstens zwei beabstandet zueinander angeordnete Rollen (7) aufweist.

16. Segment (10) nach Anspruch 14 oder 15 wobei jede Rolle (7) eine Achse (12) aufweist, wobei eine gedachte Verlängerung der Achse (12) eine Drehachse (1) des Melkkarussells schneidet.

## Claims

1. Milking carousel comprising
a platform (11) which is rotatable about an axis of rotation (1) and which has a plurality of milking stalls,
a circular, stationary carrying path (3),
a circular guide path (2) which is connected to the platform (11), wherein the carrying path (3) and the guide path (2) are arranged concentrically with respect to one another and one above the other, and
a carrying wagon (6) with wheels (7) which are arranged between the carrying path (3) and the guide path (2),
**characterized in that**
the carrying wagon (6) is formed by a plurality of annular segments (10) which are arranged between the carrying path (3) and the guide path (2), wherein each segment (10), as seen in a circumferential direction of the segment (10), has at least two checking portions (16) which are formed spaced apart from one another.

2. Milking carousel according to Claim 1, wherein the segments (10) are connected to one another in an articulated manner.

3. Milking carousel according to Claim 1 or 2, wherein each segment (10) has at least two wheels (7) which are arranged spaced apart from one another.

4. Milking carousel according to Claim 3, wherein each wheel (7) has an axis (12), wherein an imaginary extension of the axis (12) intersects the axis of rotation (1).

5. Milking carousel according to Claim 3 or 4, wherein at least one wheel (7) has at least one collar (17).

6. Milking carousel according to at least one of Claims 1 to 5, wherein each checking portion (16) has a radial extent which corresponds to a radial extent of the carrying path (3) or of the guide path (2).

7. Milking carousel according to at least one of Claims 1 to 5, wherein the radial extents of the checking portion (16) and the carrying path (3) and the guide path (2) are the same.

8. Carrying wagon (6) of a milking carousel having a carrying path (3) and a guide path (2), wherein the carrying wagon (6) has wheels (7) which are suitable and intended for being arranged between a carrying path (3) and a guide path (2) of the milking carousel, **characterized in that** the carrying wagon (6) is formed by a plurality of annular segments (10), wherein each segment (10), as seen in a circumferential direction of the segment (10), has at least two checking portions (16) which are formed spaced apart from one another.

9. Carrying wagon (6) according to Claim 8, wherein each segment (10) has at least two wheels (7) which are arranged spaced apart from one another.

10. Carrying wagon (6) according to Claim 9, wherein each wheel (7) has an axis (12), wherein an imaginary extension of the axis (12) intersects an axis of rotation (1) of the milking carousel.

11. Carrying wagon (6) according to Claim 8 or 9, wherein at least one wheel (7) has at least one collar (17).

12. Carrying wagon (6) according to at least one of Claims 8 to 11, wherein each checking portion (16) has a radial extent which corresponds to a radial extent of the carrying path (3) or of the guide path (2).

13. Carrying wagon (6) according to at least one of Claims 8 to 12, wherein the radial extents of the checking portions (16) and the carrying path (3) and the guide path (2) are the same.

14. Segment (10) of a carrying wagon (6) of a milking carousel having a carrying path (3) and a guide path (2), **characterized in that** the segment (10) is an annular segment and has at least one wheel (7), wherein said segment, as seen in a circumferential direction of the segment (10), has at least two checking portions (16) which are formed spaced apart from one another and by means of which the curvature of individual elements of the guide path and/or of the carrying path can be checked.

15. Segment (10) according to Claim 14, wherein said segment has at least two wheels (7) which are arranged spaced apart from one another.

16. Segment (10) according to Claim 14 or 15, wherein each wheel (7) has an axis (12), wherein an imaginary extension of the axis (12) intersects an axis of rotation (1) of the milking carousel.

## Revendications

1. Carrousel de traite comprenant
une plate-forme (11) dotée d'une pluralité de postes de traite, laquelle peut tourner autour d'un axe de rotation (1),
une voie porteuse (3) fixe circulaire,
une voie de guidage (2) circulaire reliée à la plate-forme (11), la voie porteuse (3) et la voie de guidage (2) étant disposées de manière concentrique l'une par rapport à l'autre et l'une au-dessus de l'autre, et
un chariot porteur (6) doté de rouleaux (7) qui sont disposés entre la voie porteuse (3) et la voie de guidage (2),
**caractérisé en ce que**
le chariot porteur (6) est formé par une pluralité de segments (10) annulaires circulaires qui sont disposés entre la voie porteuse (3) et la voie de guidage (2), chaque segment (10) présentant, considéré dans la direction périphérique du segment (10), au moins deux parties de contrôle (16) réalisées de manière espacée les unes des autres.

2. Carrousel de traite selon la revendication 1, les segments (10) étant reliés les uns aux autres de manière articulée.

3. Carrousel de traite selon la revendication 1 ou 2, chaque segment (10) présentant au moins deux rouleaux (7) disposés de manière espacée les uns des autres.

4. Carrousel de traite selon la revendication 3, chaque rouleau (7) présentant un axe (12), un prolongement imaginaire de l'axe (12) coupant l'axe de rotation (1).

5. Carrousel de traite selon la revendication 3 ou 4, au moins un rouleau (7) présentant au moins un rebord (17).

6. Carrousel de traite selon au moins l'une des revendications 1 à 5, chaque partie de contrôle (16) présentant une étendue radiale qui correspond à une étendue radiale de la voie porteuse (3) ou de la voie de guidage (2).

7. Carrousel de traite selon au moins l'une des revendications 1 à 5, les étendues radiales de la partie de contrôle (16) et de la voie porteuse (3) ainsi que de la voie de guidage (2) étant identiques.

8. Chariot porteur (6) d'un carrousel de traite qui présente une voie porteuse (3) et une voie de guidage (2), le chariot porteur (6) présentant des rouleaux (7) qui sont appropriés et destinés à être disposés entre une voie porteuse (3) et une voie de guidage (2) du carrousel de traite, **caractérisé en ce que** le chariot porteur (6) est formé par une pluralité de segments (10) annulaires circulaires, chaque segment (10) présentant, considéré dans la direction périphérique du segment (10), au moins deux parties de contrôle (16) réalisées de manière espacée les unes des autres.

9. Chariot porteur (6) selon la revendication 8, chaque segment (10) présentant au moins deux rouleaux (7) disposés de manière espacée les uns des autres.

10. Chariot porteur (6) selon la revendication 9, chaque rouleau (7) présentant un axe (12), un prolongement imaginaire de l'axe (12) coupant un axe de rotation (1) du carrousel de traite.

11. Chariot porteur (6) selon la revendication 8 ou 9, au moins un rouleau (7) présentant au moins un rebord (17).

12. Chariot porteur (6) selon au moins l'une des revendications 8 à 11, chaque partie de contrôle (16) présentant une étendue radiale qui correspond à une étendue radiale de la voie porteuse (3) ou de la voie de guidage (2).

13. Chariot porteur (6) selon au moins l'une des revendications 8 à 12, les étendues radiales des parties de contrôle (16) et de la voie porteuse (3) ainsi que de la voie de guidage (2) étant identiques.

14. Segment (10) d'un chariot porteur (6) d'un carrousel de traite qui présente une voie porteuse (3) et une voie de guidage (2), **caractérisé en ce que** le segment (10) est réalisé de manière annulaire circulaire et présente au moins un rouleau (7), celui-ci présentant, considéré dans la direction périphérique du segment (10), au moins deux parties de contrôle (16) réalisées de manière espacée les unes des autres, au moyen desquelles la courbure d'éléments individuels de la voie de guidage et/ou de la voie porteuse peut être contrôlée.

15. Segment (10) selon la revendication 14, celui-ci présentant au moins deux rouleaux (7) disposés de manière espacée les uns des autres.

16. Segment (10) selon la revendication 14 ou 15, chaque rouleau (7) présentant un axe (12), un prolongement imaginaire de l'axe (12) coupant un axe de rotation (1) du carrousel de traite.
